# EUROPEAN PATENT SPECIFICATION

(11) **EP 0 688 706 B1**
(45) Date of publication and mention of the grant of the patent: **08.04.1998**
(21) Application number: 95109003.4
(22) Date of filing: 12.06.1995
(51) Int. Cl.: B60S 1/32

(54) **A windscreen wiper arm for vehicles**
Scheibenwischerarm für Kraftfahrzeuge
Bras d'essuie-glace pour véhicules automobiles

(30) Priority: 22.06.1994 IT TO940514
(43) Date of publication of application: 27.12.1995
(73) Proprietor: Cooper Industries, Inc., Houston, Texas 77002 (US)
(72) Inventor: Gritella, Carlo, I-10096 Collegno (Torino) (IT)
(74) Representative: Marchitelli, Mauro

(56) References cited:
- GB-A- 2 163 948
- GB-A- 2 240 264

## Description

The present invention relates to a windscreen wiper arm for vehicles of the type including:
- an attachment element with a hole for fixing it to one end of a reciprocably rotatable drive shaft,
- a first arm portion pivoted on the attachment element and movable between a lowered position and a raised position,
- a second arm portion releasably connected to the first portion and carrying an arcuate structure having a wiper element, and
- a spring acting between the first arm portion and the attachment element for holding the wiper element in contact with the windscreen.

A windscreen wiper arm of the type specified above is known from the British patent application GB-A-2 240 264. In a windscreen wiper arm of this type, the second arm portion with the arcuate structure and the wiper element constitute an inseparable unit. When the wiper element is worn, the entire unit comprising the wiper element, the arcuate structure and the second arm portion, is removed and replaced.

The first arm portion is generally made of metal as it must be strong enough to bear the load of the biasing spring while, for reasons of aesthetics and economy, the second arm portion and the arcuate structure are made of plastics material. In order to replace the unit carrying the wiper element in this type of arm, the arm is rotated into its raised position, the unit with the worn wiper element is removed and a new unit is fitted to the first arm portion.

The problem with prior art windscreen wiper arms is that, during the wiper unit replacement operation described above, it is possible to damage the vehicle windscreen accidentally. In fact, once the wiper unit has been removed, the first arm portion (which is generally of metal) is in its raised position with its biasing spring loaded. The raised position of the first arm portion is a position of stable equilibrium; however, should the first arm portion be jolted accidentally it could be returned violently to the windscreen by the spring and could break or seriously damage it.

In order to overcome the above problem, the present invention provides a windscreen wiper arm of the type specified above, characterised in that it includes a stop device for preventing the first arm portion from moving from its raised position to its lowered position against the force exerted by the spring when the second arm portion has been removed from the first arm portion.

Further characteristics and advantages of the present invention will become clear from the following detailed description, provided purely by way of non-limitative example, with reference to the appended drawings, in which:
- Figure 1 is a partially sectioned side view of a windscreen wiper arm according to the invention fitted on a vehicle;
- Figure 2 is an exploded perspective view of the part indicated by the arrow II of Figure 1;
- Figure 3 is a longitudinal section, on an enlarged scale, of the part indicated by the arrow III of Figure 1; and
- Figures 4 and 5 are sections similar to that of Figure 3, illustrating the operation of the stop device of the invention.

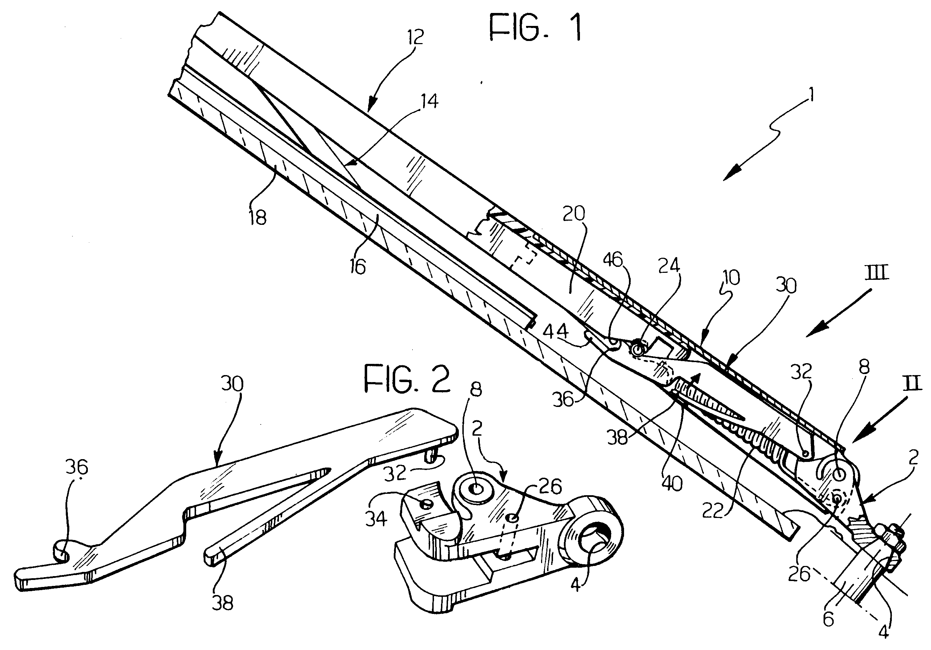

With reference to the drawings, a windscreen wiper arm 1 includes a metal attachment element 2 with a hole 4 for fixing the arm 1 to the end of a reciprocably rotatable drive shaft 6 in an entirely conventional manner. The attachment element 2 carries a transverse pin 8 on which is pivoted a first channel-shaped arm portion 10 made of metal. A second arm portion 12 is releasably engaged in the first portion 10. The second arm portion 12 is preferably made of plastics material and carries an arcuate structure 14, part of which is visible in Figure 1, having a wiper element 16 which, in use, is pressed against the windscreen 18 of the vehicle.

The second arm portion 12, the arcuate structure 14 and the wiper element 16 are permanently connected together to form a wiper unit which cannot be dismantled. There is, therefore, a permanent articulation between the second arm portion 12 and the arcuate structure 14 and no attachment connectors are provided. The wiper element 16 is also permanently fixed to the arcuate structure 14. Therefore, when the wiper element 16 is worn, the entire wiper unit, comprising the second portion 12, the arcuate structure 14 and the wiper element 16, is replaced.

The second arm portion 12 has a root end 20 which is engaged in the channel section of the first arm portion 10. The arm portions 10 and 12 are locked together longitudinally by a retaining device which is not described in detail as it does not fall within the scope of the present invention. One example of a suitable retaining device is described in GB-A-2 240 264.

The force which holds the wiper element 16 in contact with the windscreen 18 is exerted by a tensioned helical spring 22 which has one end anchored on a transverse pin 24 carried by the first arm portion 10 and its other end anchored on a transverse pin 26 carried by the attachment element 2.

A bar or stop member 30, constituted by a flat, shaped element of plastics material, is positioned inside the channel section of the first arm portion 10 and has an integral pin 32 engaged in a hole 34 in the attachment element 2 so as to articulate a first end portion of the stop member 30 on the attachment element 2 (see in particular Figure 2). The opposite end of the stop member 30 has a hook portion 36 engageable with the transverse pin 24 on which one end of the biasing spring 22 is pivoted.

The stop member 30 has an integral, deformable projecting leaf-spring element 38 which cooperates with a projection 40 on the first portion 10. The projection 40 keeps the leaf-spring element 38 bent inwards relative to its free, undeformed configuration and, by reaction, the leaf-spring element 38 urges the stop member 30 in the direction indicated by the arrow 42.

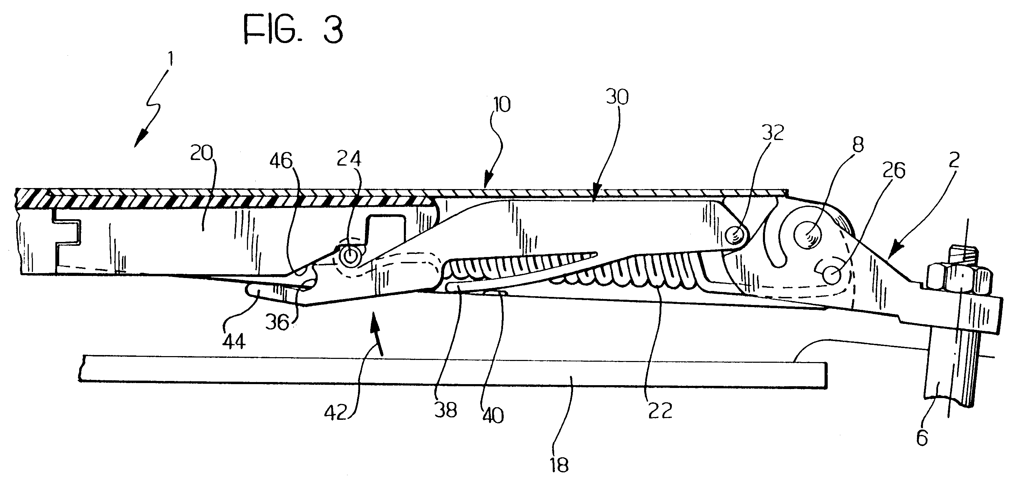

The operation of the arm locking system will now be described with reference to Figures 3, 4 and 5.

In the configuration of Figure 3, the second portion 12 is engaged in the first portion 10 and the arm is in its lowered position. The hook portion 36 of the stop member 30 is not engaged with the transverse pin 24 and the stop member 30 thus does not obstruct the angular movement of the first arm portion 10 about the transverse pin 8.

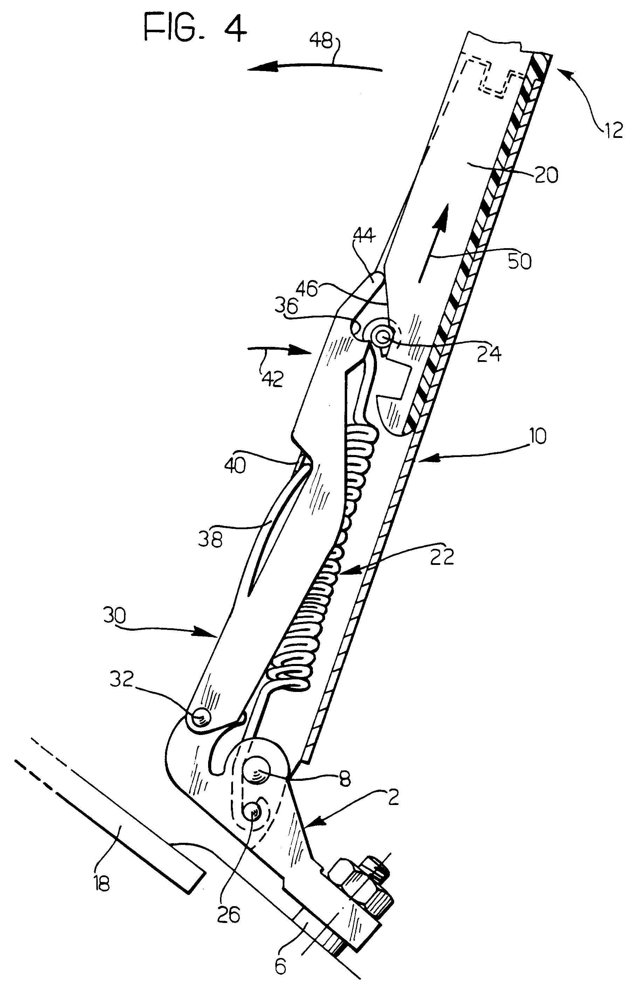

In Figure 4, the arm 1 is shown in its raised position. In the configuration of Figure 4, the second arm portion 12 is again engaged in the first portion 10. Contact between a finger 44 of the stop member 30 and an inclined surface 46 of the root end 20 of the second portion 12 prevents the hook portion 36 from engaging the transverse pin 24. Therefore, when the second portion 12 is engaged in the first portion 10, the arm 1 may be rotated in the direction of the arrow 48 of Figure 4 to return it to its lowered position.

Starting from the configuration of Figure 4, if the second portion 12 is moved longitudinally of the first portion 10 in the direction indicated by the arrow 50 so as to remove the second portion 12 therefrom, the finger 44 of the stop member 30 is no longer held by the surface 46 so that the stop member 30 can then rotate slightly in the direction indicated by the arrow 42 under the action of the leaf-spring element 38.

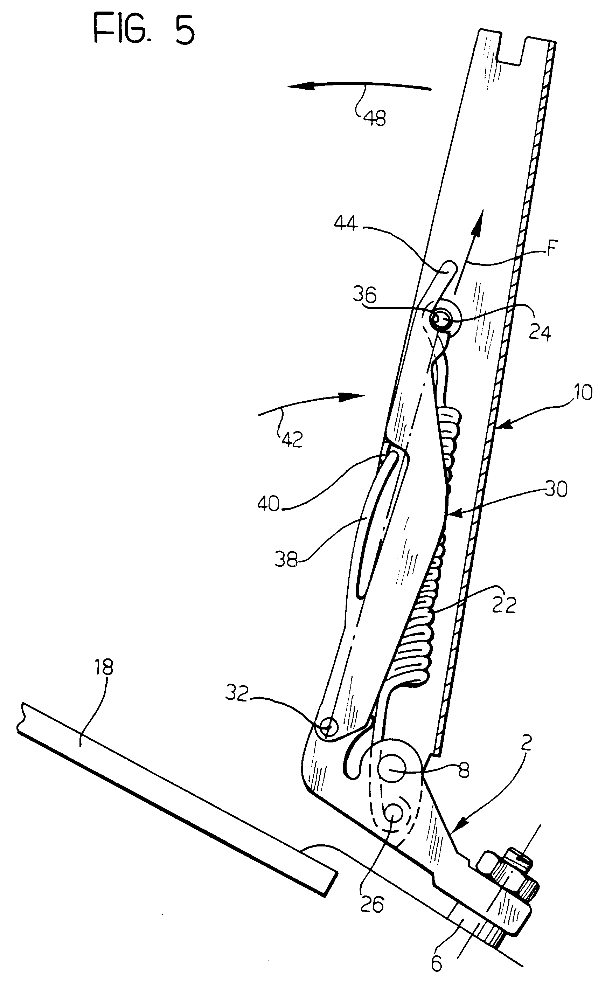

The stop member 30 thus moves into the configuration of Figure 5 in which the hook portion 36 engages the transverse pin 24. In this configuration, a torque tending to rotate the first portion 10 in the direction 48 is countered by a force F acting along the line joining the transverse pin 36 to the pivot point 32 of the stop member 30. In this way, the stop member 30 prevents the first portion 10 from rotating in the direction 48.

## Claims

1. A windscreen wiper arm for vehicles, including:
- an attachment element (2) with a hole (4) for fixing it to one end of a reciprocably rotatable drive shaft (6),
- a first arm portion (10) pivoted on the attachment element (2) and movable between a lowered position and a raised position,
- a second arm portion (12) releasably connected to the first portion (10) and carrying an arcuate structure (14) with a wiper element (16), and
- a spring (22) acting between the first arm portion (10) and the attachment element (2) for holding the wiper element (16) in contact with the windscreen,
characterised in that it includes a stop device (30) for preventing the first arm portion (10) from moving from its raised position to its lowered position against the force exerted by the spring (22) when the second arm portion (12) has been removed from the first arm portion (10).

2. A windscreen wiper arm according to Claim 1, characterised in that the stop device comprises a bar stop member (30) which can assume a locking position and a release position, the second arm portion (12) having a disengagement surface (46) which, when the arm is raised, cooperates with the stop member (30) to retain it in its released position.

3. A windscreen wiper arm according to Claim 2, characterised in that the stop member (30) has a first end articulated on the attachment element (2) and a second end with a hook portion (36) engageable with a transverse pin (24) which anchors one end of said biasing spring (22).

4. A windscreen wiper arm according to Claim 2, characterised in that the stop device includes resilient means (38) for urging the stop member (30) towards its locking position.

5. A windscreen wiper arm according to Claim 3, characterised in that the resilient means comprise a deformable leaf-spring element (38) which is integral with the stop member (30).

## Patentansprüche

1. Ein Scheibenwischerarm für Fahrzeuge, der einschließt:
ein Befestigungselement (2) mit einem Loch (4) zu seiner Befestigung an einem Ende einer hin- und herdrehbaren Antriebswelle (6),
einen ersten Armabschnitt (10), der an dem Befestigungselement (2) verschwenkbar und zwischen einer abgesenkten und einer angehobenen Stellung bewegbar ist,
eine zweiten Armabschnitt (12), der an dem ersten Abschnitt (10) lösbar befestigt ist und eine bogenförmige Konstruktion mit einem Wischerelement (16) trägt, und
eine Feder (22), die zwischen dem ersten Armabschnitt (10) und dem Befestigungselement (2) wirkt, um das Wischerelement (16) mit der Widschutzscheibe in Berührung zu halten,
**dadurch gekennzeichnet,** daß er eine Anschlageinrichtung (30) einschließt, um zu verhindern, daß sich der erste Armabschnitt (10) aus seiner angehobenen Stellung gegen die von der Feder (22) ausgeübte Kraft in seine abgesenkte Stellung bewegt, wenn der zweite Armabschnitt (12) von dem ersten Armabschnitt (10) entfernt worden ist.

2. Ein Scheibenwischerarm gemäß Anspruch 1, **dadurch gekennzeichnet,** daß die Anschlageeinrichtung eine Stange oder ein Anschlagelement (30) umfaßt, das eine Verriegelungsstellung und eine Freigabestellung annehmen kann, der zweite Armabschnitrt (12) eine Außereingriffoberfläche (46) aufweist, die, wenn der Arm angehoben ist, mit dem Anschlagelement (30) zusammenarbeitet, um ihn in der freigegebenen Stellung zu halten.

3. Ein Scheibenwicherarm gemäß Anspruch 2, **dadurch gekennzeichnet,** daß das Anschlagelement (30) ein erstes, an dem Befestigungselement (2) angelenktes Ende und ein zweites Ende mit einem Hakenabschnitt (36) aufweist, der mit einem Querstift (24) eingreifbar ist, der eine Ende der genannten Belastungsfeder (22) verankert.

4. Ein Scheibenwischerarm gemäß Anspruch 2, **dadurch gekennzeichnet,** daß die Anschlageinrichtung eine elestische Einrichtung (38) aufweist, um das Anschlagelement (30) in Richtung seiner Verriegelungsstellung zu drücken.

5. Ein Scheibenwischerarm gemäß Anspruch 3, **dadurch gekennzeichnet,** daß die elastische Einrichtung ein verformbares Blattfederelement (38) umfaßt, das mit dem Anschlagelement (30) einstückig ist.

## Revendications

1. Bras d'essuie-glace pour véhicules comprenant:
- un élément de fixation (2) muni d'un trou (4) pour le fixer à l'une des extrémités d'un arbre moteur (6) rotatif suivant un mouvement en va-et-vient,
- une première partie (10) de bras pivotant sur l'élément de fixation (2) et déplaçable entre une position abaissée et une position relevée,
- une seconde partie (12) de bras fixée de manière amovible à la première partie (10) et portant une structure arquée (14) munie d'un élément (16) formant balai, et
- un ressort (22) agissant entre la première partie de bras (10) et l'élément de fixation (2) pour maintenir l'élément (16) formant balai en contact avec le pare-brise,
caractérisé en ce qu'il comprend un dispositif d'arrêt (30) pour empêcher la première partie de bras (10) de se déplacer de sa position relevée vers sa position abaissée à l'encontre de la force exercée par le ressort (22) lorsque la seconde partie de bras (12) a été démontée de la première partie de bras (10).

2. Bras d'essuie-glace selon la revendication (1) caractérisé en ce que le dispositif d'arrêt comprend un organe (30) formant d'arrêt de blocage pouvant prendre une position de verrouillage et une position de libération, la seconde partie de bras (12) comportant une surface de désaccouplement (46) qui, lorsque le bras est relevé, coopère avec l'organe (30) d'arrêt pour le retenir dans sa position libérée.

3. Bras d'essuie-glace selon la revendication 2, caractérisé en ce que l'organe (30) d'arrêt comporte une première extrémité articulée sur l'élément de fixation (2) et une seconde extrémité munie d'une partie (36) formant crochet pouvant coopérer avec un axe transversal (24) qui ancre l'une des extrémités dudit ressort de rappel (22).

4. Bras d'essuie-glace selon la revendication 2, caractérisé en ce que le dispositif d'arrêt comprend des moyens élastiques (38) pour solliciter l'organe (30) formant butée vers sa position de verrouillage.

5. Bras d'essuie-glace selon la revendication 3, caractérisé en ce que les moyens élastiques comprennent un élément (38) formant ressort à lames déformable formé en une seule pièce avec l'organe (30) d'arrêt.
